# EUROPÄISCHE PATENTSCHRIFT

(11) **EP 0 858 936 B1**
(45) Veröffentlichungstag und Bekanntmachung des Hinweises auf die Patenterteilung: **27.08.2003**
(21) Anmeldenummer: 98101373.3
(22) Anmeldetag: 27.01.1998
(51) Int. Cl.: B60R 22/48, B60R 22/34, B60R 22/353, B60R 22/415

(54) **Gurtaufroller für einen Fahrzeugsicherheitsgurt**
Retractor for a vehicle seat belt
Enrouleur pour une ceinture de sécurité de véhicule

(30) Priorität: 14.02.1997 DE 29702610 U
(43) Veröffentlichungstag der Anmeldung: 19.08.1998
(73) Patentinhaber: TRW Occupant Restraint Systems GmbH & Co. KG, 73551 Alfdorf (DE)
(72) Erfinder: Rink, Jürgen, 73550 Waldstetten (DE)
(74) Vertreter: Kitzhofer, Thomas, Dipl.-Ing.

(56) Entgegenhaltungen:
- EP-A- 0 718 159
- EP-A- 0 811 535
- DE-U- 8 803 659
- DE-U- 9 318 286
- DE-U- 29 605 803

## Beschreibung

Die Erfindung betrifft einen Gurtaufroller für einen Fahrzeugsicherheitsgurt, mit einer in einem Gehäuse drehbar gelagerten Gurtspule, einem auf der Gurtspule aufgewickelten Gurtband, einem Sperrmechanismus zur Blockierung der Gurtspulendrehung, einem Planetenzahnradgetriebe mit einem drehfest an die Gurtspule angeschlossenen Sonnenrad, einem gehäusefesten Hohlrad und wengistens einem Planetenrad, das eine Außenverzahnung aufweist, sowie einer elektrischen Schalteinheit zur Bestimmung des Anlegezustandes aufgrund der Länge des abgezogenen Gurtbandes, wobei die Schalteinheit elektrisch mit einer Steuereinheit zur Aktivierung eines Gasgenerators gekoppelt ist und einen durch die Bewegung des Planetenrades betätigbaren Schalthebel umfaßt.

Ein gattungsgemäßer Gurtaufroller ist aus der DE-A-296 05 803.3 bekannt. Ein Planetenrad dieses bekannten Gurtaufrollers ist mit einem Hebel über ein auf der Gurtspulenwelle drehbar gelagertes Ritzel gekoppelt, so daß sich das Ritzel beim Umlauf des Planetenrades um das Sonnenrad dreht. In die Verzahnung des Ritzels greift eine Verzahnung einer Zahnstange ein. Beim Abwickeln des Gurtbandes dreht sich das Ritzel mit dem Planetenrad, und die Zahnstange wird in eine Richtung bewegt. Die Verstellung der Zahnstange wird zur Bestimmung des Anlegezustandes, d. h. ob der Insasse angegurtet ist oder nicht, abgetastet, wobei ab einer vorbestimmten Länge des Gurtbandabzugs davon ausgegangen wird, daß sich der auf dem dem Gurtaufroller zugeordneten Fahrzeugsitz befindliche Insasse tatsächlich angegurtet hat. Nur wenn die Schalteinheit betätigt ist, aktiviert die Steuereinheit im Rückhaltefall einen Gasgenerator, der Teil eines Gurtstraffers oder eines Gassack-Rückhaltesystems ist. Da die Stellung der Zahnstange über einen an ihr anliegenden, federbelasteten Schalthebel abgefragt wird, ergibt sich ein relativ langer Kraftübertragungsweg über zahlreiche Teile. Diese Teile müssen möglichst spielfrei aneinander anliegen, damit eine sichere Betätigung der Schalteinheit gewährleistet ist.

Aus der DE-U-93 18 286 ist ein Gurtaufroller für einen Fahrzeugsicherheitsgurt bekannt, der zur Sicherung eines Kindersitzes im Fahrzeug durch Ausziehen einer bestimmten Gurtbandlänge in den Sperrzustand versetzt werden kann. Nachdem das Gurtband nahezu vollständig wiederaufgewickelt ist, wird der Gurtaufroller in den fahrzeug- und gurtbandsensitiven Sperrmodus zurückgeschaltet. Nur für diesen Zweck ist ein Planetenzahnradgetriebe vorgesehen. Darüber hinaus ist eine Schaltwippe vorhanden, die zwei Betätigungsarme hat, von denen ein Betätigungsarm mit einer Schaltklinke versehen ist, die mit einer Außenverzahnung an der Steuerscheibe in Eingriff oder außer Eingriff kommen kann. Die Schaltwippe kann durch Schaltzähne an den Planetenrädern betätigt werden.

Aus der DE-U-88 03 659 ist ebenfalls ein Gurtaufroller bekannt, der mit einem Planetenzahnradgetriebe ausgestattet ist und einen mechanischen Sperrmechanismus besitzt, der die Sicherung eines Kindersitzes erlaubt.

Die Erfindung schafft einen einfacher aufgebauten, kompakten Gurtaufroller, bei dem die Kraftübertragung von dem Planetenrad bis zur Schalteinheit unmittelbarer erfolgt als bei dem bekannten Gurtaufroller. Dies wird bei einem Gurtaufroller der eingangs genannten Art dadurch erreicht, daß der Schalthebel als zwischen einer ersten und einer zweiten Stellung verschwenkbare Schaltwippe ausgebildet ist und daß das Planetenrad wenigstens einen Schaltnocken aufweist, der bei einer vorgegebenen Länge von abgezogenem Gurtband direkt an der Schaltwippe angreift und die Schaltwippe von der ersten in die zweite Stellung bewegt. Beim erfindungsgemäßen Gurtaufroller entfällt die im Stand der Technik erforderliche Zahnstange sowie das zu deren Betätigung erforderliche Ritzel. Das Planetenrad greift vielmehr unmittelbar über einen Schaltnocken an einer Schaltwippe an, so daß sowohl in axialer als auch in radialer Richtung für die gesamte Schalteinheit weniger Platz benötigt wird.

Die Schaltwippe muß, nachdem sie von der ersten in die zweite Stellung bewegt worden ist, beim Ablegen des Gurtes wieder in die erste Stellung zurückbewegt werden. Dies kann gemäß der bevorzugten Ausführungsform erneut durch einen an einem Planetenrad vorgesehen Schaltnocken erfolgen. Hierzu kann derselbe Schaltnocken verwendet werden, der auch beim Abzug von Gurtband die Schaltwippe betätigt, oder es kann ein zweiter Schaltnocken vorgesehen sein, der an demselben oder an einem zweiten Planetenrad vorgesehen ist.

Der Schalter umfaßt einen an der Schaltwippe angreifenden Schaltstößel.

Eine schnelle, einfache Montage wird dadurch erreicht, daß der Schalter als vormontierte Einheit ausgebildet ist und ein Schaltergehäuse aufweist, welches durch eine Schnappverbindung am Gurtaufroller befestigt ist.

Bei der bevorzugten Ausführungsform des erfindungsgemäßen Gurtaufrollers weist dieser einen Auslösemechanismus mit einer relativ zur Gurtspule begrenzt verdrehbaren Steuerscheibe auf, durch deren Relativdrehung zur Gurtspule der Sperrmechanismus aktivierbar ist. Ferner ist eine Deaktiviereinrichtung mit einer zweiten Schaltwippe vorgesehen, die in einer ersten Schaltstellung die Steuerscheibe und dadurch den Sperrmechanismus blockiert. Die Deaktiviereinrichtung, auch als Kindersicherung bekannt, dient dazu, den Sperrmechanismus so zu betätigen, daß ein Kindersitz unverrückbar an einem Fahrzeugsitz festgelegt wird. Die Gestalt der zweiten Schaltwippe entspricht vorzugsweise im wesentlichen der der ersten Schaltwippe und wird auch durch wenigstens einen Schaltnocken an einem Planetenrad von der ersten in die zweite Schaltstellung und zurück bewegt. Der konstruktive Aufwand für die Deaktiviereinrichtung und die Schalteinheit wird dadurch geringgehalten, daß dasselbe Planetenzahnradgetriebe zur Betätigung von nahezu identischen Schaltwippen verwendet werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht der aufgeschnittenen Steuerseite des erfindungsgemäßen Gurtaufrollers mit nicht betätigter Schalteinheit;
- Figur 2 eine Perspektivansicht der Steuerseite des in Figur 1 gezeigten Gurtaufrollers gemäß einer ersten Ausführungsform mit aufgeschnittenem Hohlrad;

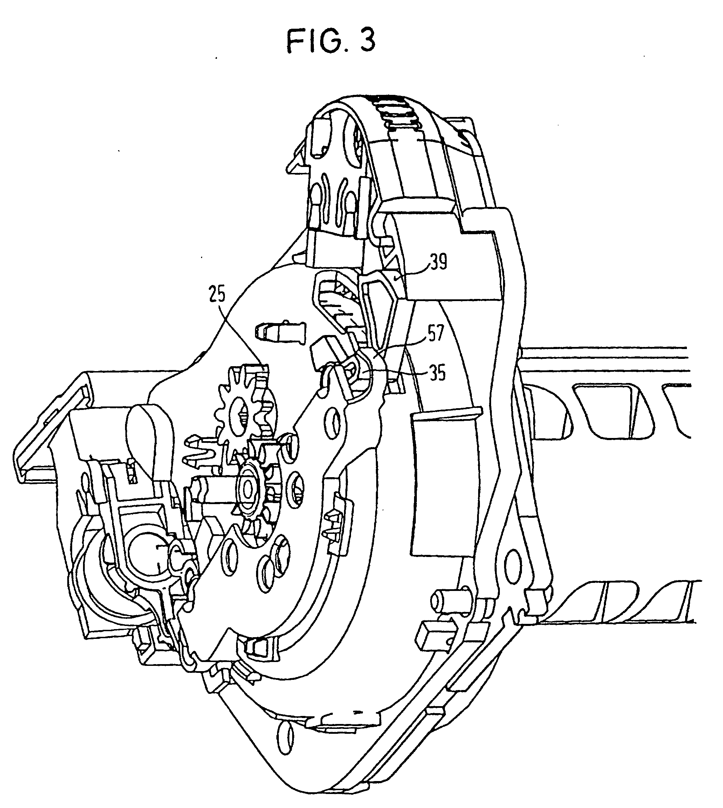

- Figur 3 eine Perspektivansicht der aufgeschnittenen Steuerseite des erfindungsgemäßen Gurtaufrollers, wobei die Schnittebene derjenigen von Figur 1 entspricht;

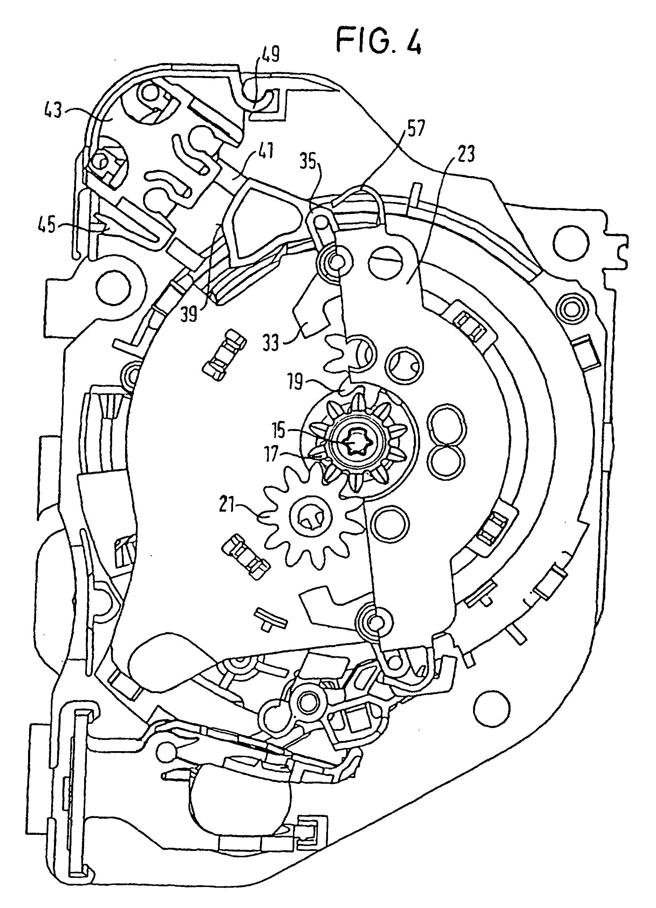

- Figur 4 eine Ansicht des aufgeschnittenen Gurtaufrollers nach den Figuren 1 bis 3 mit betätigter Schalteinheit, wobei die Schnittebene derjenigen von Figur 1 entspricht;

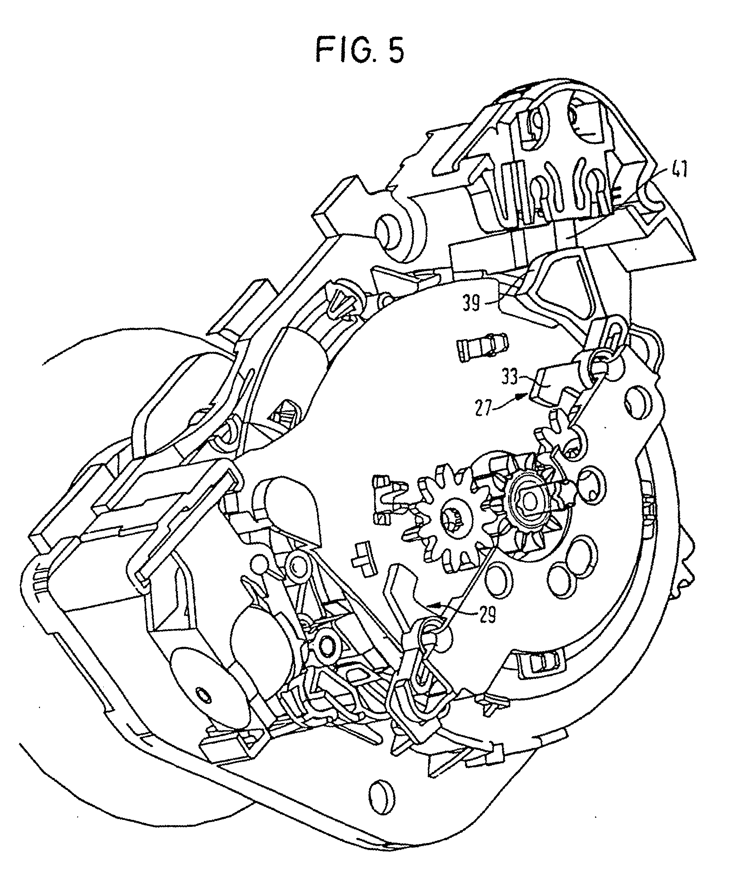

- Figur 5 eine Perspektivansicht des erfindungsgemäßen Gurtaufrollers mit betätigter Schalteinheit, wobei die Schnittebene derjenigen von Figur 1 entspricht;
- Figur 6 eine Ansicht der aufgeschnittenen Steuerseite des erfindungsgemäßen Gurtaufrollers gemäß der ersten Ausführungsform mit separat gekennzeichneten Schaltnocken; und
- Figur 7 eine Ansicht der aufgeschnittenen Steuerseite des erfindungsgemäßen Gurtaufrollers gemäß einer zweiten Ausführungsform mit drei Planetenrädern.

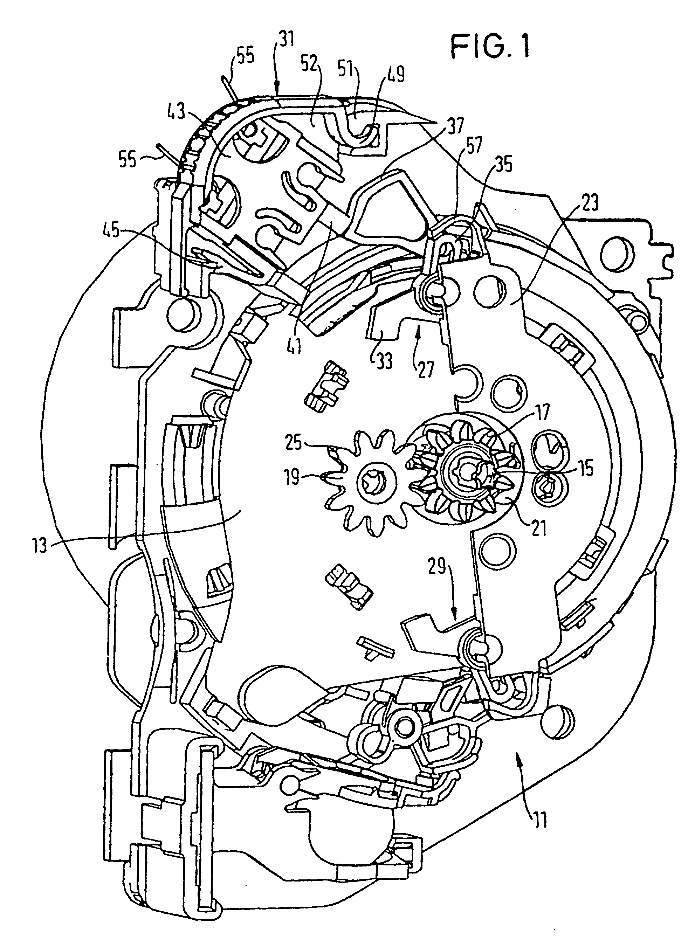

Von dem erfindungsgemäßen Gurtaufroller wird im folgenden nur die sogenannte Steuerseite beschrieben, da alle übrigen Bestandteile herkömmlich ausgebildet sind. Der Gurtaufroller umfaßt eine Gurtspule, die zwischen den Schenkeln eines U-förmigen Rahmens drehbar gelagert ist. Ferner ist ein Sperrmechanismus 11 vorhanden, der auf einen fahrzeugsensitiven und gurtbandsensitiven Auslösemechanismus anspricht und die Gurtspule im Notfall lasttragend sperrt. In Figur 1 sind durch eine Abdeckung 13 eine Betätigungsscheibe, eine Kupplungsscheibe sowie eine Steuerscheibe als Teil eines Auslösemechanismus, durch den die Gurtspule im Rückhaltefall gesperrt werden kann, verdeckt. An der Außenseite der Abdeckung 13 ist ein Planetenzahnradgetriebe angeordnet. Dieses besteht aus einem drehfest mit der Gurtspule, von der nur ein axial abstehender, eingepreßter Lagerstift 15 zu sehen ist, verbundenen Sonnenrad 17, zwei Planetenrädern 19, 21 sowie einem innenverzahnten Hohlrad 23, das in einer Abdeckkappe gebildet ist, von der nur die rechte Hälfte gezeigt ist. Die Planetenräder 19, 21 sind mit Schaltnocken, von denen in Figur 1 nur der Schaltnocken 25 gezeigt ist, in Form von gegenüber den übrigen Zähnen axial verlängerten Zähnen versehen. Die Schaltnocken betätigen zwei Schaltwippen, nämlich eine erste Schaltwippe 27 und eine zweite Schaltwippe 29. Die Schaltwippen 27, 29 sind schwenkbar an der Innenseite des Hohlrads 23 gelagert und können zwei stabile Schaltstellungen einnehmen.

Die Schaltwippe 27 ist Teil einer Schalteinheit, die ferner einen Schalter 31 aufweist. Die Schaltwippe 27 hat zwei Betätigungsarme, von denen in Figur 1 nur der linke Betätigungsarm 33 sichtbar ist. Radial nach außen erstreckt sich ein an der Schaltwippe 27 angeformter Rastarm 35, von dem wiederum, axial nach hinten versetzt zu diesem, ein Schaltarm 37 absteht. An einer radial nach außen weisenden Steuerfläche 39 des Schaltarmes 37 liegt ein Schaltstößel 41 des Schalters 31 federbelastet an.

Der Schalter 31 ist als vormontierte Einheit ausgebildet und umfaßt ein Schaltergehäuse 43, welches durch eine Schnappverbindung 45 am Gurtaufroller befestigt werden kann. An der der Schnappverbindung 45 gegenüberliegenden Seite hat das Schaltergehäuse 43 einen bogenförmigen Fortsatz 49, der einen Lagerzapfen 51 am Aufrollgehäuse 52 umgreift, so daß sich eine Art Schwenklager ergibt. Der Schalter 31 wird zu seiner Montage von außen, mit dem Fortsatz 49 voraus, in das nicht vollständig gezeigte Aufrollergehäuse 52, das die Steuerseite umgibt, eingeschoben und anschließend um den Lagerzapfen 51 in Richtung Sonnenrad 17 geschwenkt, bis die Schnappverbindung 45 in das Aufrollgehäuse 52 einrastet. Der Schalter 31 ist über eine elektrische Leitung 55 einerseits mit einer Steuereinheit, die nicht Teil des Gurtaufrollers ist, und andererseits mit einem Zünder eines Gasgenerators gekoppelt. Dieser Gasgenerator ist Teil eines Gurtstraffers oder dient zum Entfalten eines Gassacks (beide nicht gezeigt). Die Steuereinheit aktiviert im Rückhaltefall über die Leitung 55 den Gasgenerator, sofern der Schalter 31 in der Ein-Stellung ist, in der die den Zündstrom führende Leitung 55 nicht unterbrochen ist. In der in Figur 1 gezeigten Stellung ist der Schalter 31 jedoch in der Aus-Stellung, da noch kein Gurtband abgezogen worden ist.

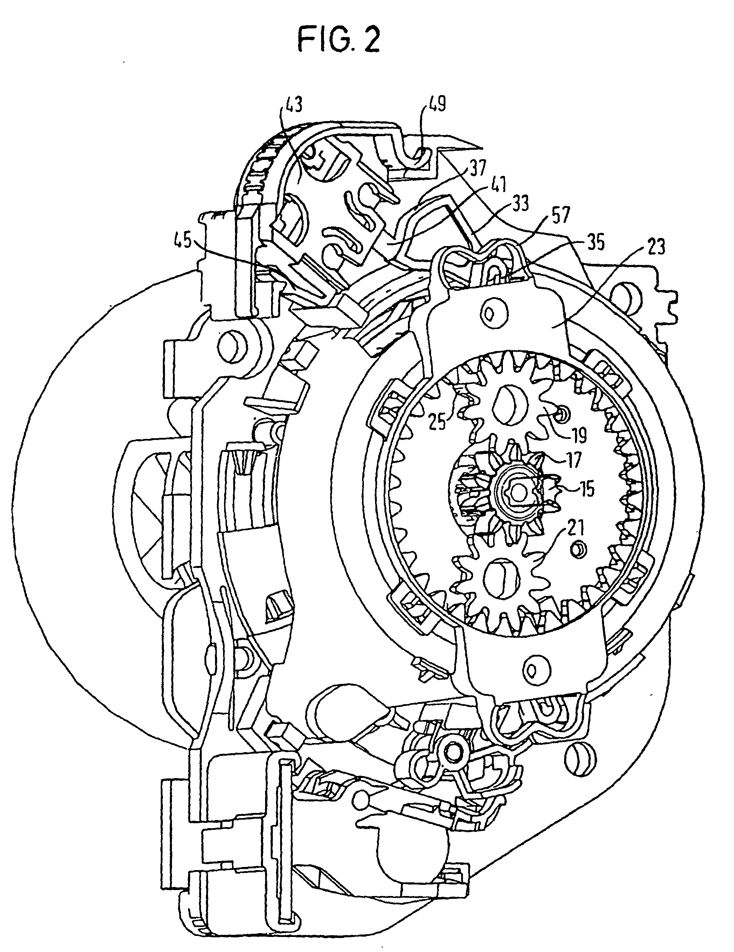

Die Schaltwippe 27 kann zwei stabile Schaltstellungen einnehmen, nämlich die in Figur 1 gezeigte erste Stellung (Aus-Stellung) und eine demgegenüber entgegen dem Uhrzeigersinn verschwenkte zweite Stellung (Ein-Stellung). Zur Stabilisierung der Schaltwippe 27 in beiden Stellungen ist ein Federelement 57 vorgesehen, das einstückig an dem Hohlrad 23 angeformt ist und aus zwei aneinandergrenzenden bogenförmigen Abschnitten (vgl. Figur 2) besteht, wobei jeder bogenförmige Abschnitt des Federelementes 57 einer Stellung der Schaltwippe 27 zugeordnet ist und in dieser Stellung den Rastarm 35 umgibt. Beim Verschwenken der Schaltwippe 27 von der ersten in die zweite Stellung verformt der Rastarm 35 (vgl. Figur 2) den Zwischensteg zwischen beiden bogenförmigen Abschnitten und gelangt in den Bereich des linken Abschnittes.

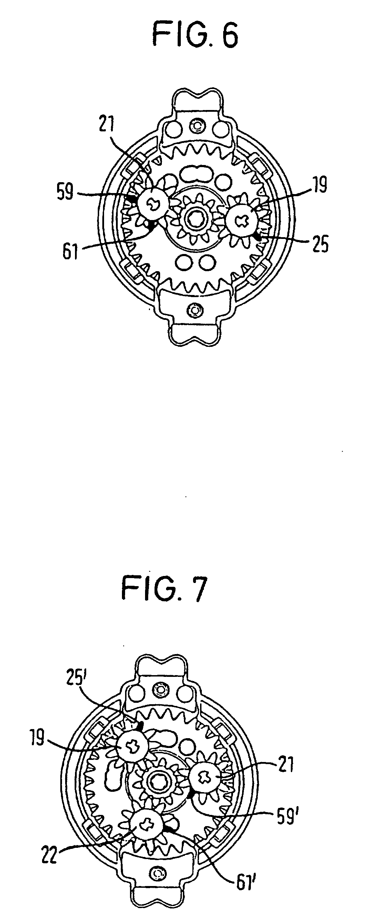

Zum Verschwenken der Schaltwippe 27 sind Schaltnocken an den Planetenrädern 19, 21 vorgesehen. Die Schaltnocken sind durch überbreite Zähne an den Planetenrädern 19, 21 gebildet. Das Planetenrad 19 weist einen Schaltnocken 25 und das Planetenrad 21 zwei Schaltnocken 59, 61 auf (vgl. Figur 6).

Die zweite Schaltwippe 29 ist Teil einer Deaktiviereinrichtung, die die Steuerscheibe und dadurch den Sperrmechanismus dann blockiert, wenn das Gurtband fast vollständig abgezogen worden ist, so daß das Gurtband nur noch aufgerollt und ein Kindersitz spielfrei durch das Gurtband am Fahrzeugsitz festgelegt werden kann. Die zweite Schaltwippe 29 entspricht in ihrer Gestalt der ersten Schaltwippe 27, wobei lediglich der Schaltarm 37 anders ausgestaltet ist und eine Mimik zur Blockierung der Steuerscheibe betätigt. Die zweite Schaltwippe 29 ist diametral bezüglich des Sonnenrades 17 der ersten Schaltwippe 27 gegenüberliegend angeordnet.

Bei nicht angelegtem Sicherheitsgurt befinden sich die Schaltwippen 27, 29 in der in Figur 1 dargestellten Ausgangsstellung. Ab Erreichen einer bestimmten Länge abgezogenen Gurtbands schlägt der Schaltnocken 59 gegen den rechten, in Figur 1 nicht sichtbaren Betätigungsarm der Schaltwippe 27 und verschwenkt diese entgegen dem Uhrzeigersinn, so daß der Schaltstößel 41 nach außen gedrückt wird und der Schalter 31 in die Ein-Stellung gelangt. Die Steuereinheit kann dadurch im Rückhaltefall über die Leitung 55 und den zwischengeschalteten Schalter 31 einen Impuls oder Zündstrom an den Gasgenerator abgeben und einen Treibsatz zünden. Aufgrund des Federelementes 57 verbleibt die Schaltwippe 29 stabil in der zweiten Stellung.

Der Schaltnocken 59 trifft bereits bei einer geringen Länge von abgezogenem Gurtband auf die Schaltwippe 27 und betätigt diese. Das Planetenrad 19 bewegt sich nach Betätigung der Schaltwippe 27 bis zum Anlegen des Gurtbandes weiter. Bei angelegtem Gurt bleibt die Schaltwippe 29 in der in Figur 1 gezeigten Stellung, in der die Deaktiviereinrichtung die Steuerscheibe noch nicht blockiert. Dadurch kann der Sperrmechanismus des Gurtaufrollers sowohl fahrzeugsensitiv als auch gurtbandsensitiv aktiviert werden.

Soll ein Kindersitz montiert werden, wird das Gurtband zuerst fast vollständig abgezogen. Der Schaltnocken 59 schlägt dabei an den rechten Betätigungsarm der Schaltwippe 29 an und verschwenkt diese im Uhrzeigersinn, so daß die Deaktiviereinrichtung die Steuerscheibe blockiert und das Gurtband nur noch aufgerollt, jedoch nicht mehr abgezogen werden kann.

Wenn der Sicherheitsgurt abgelegt und vom Gurtaufroller aufgewickelt wird, trifft der Schaltnocken 25 des Planetenrades 19 auf die Schaltwippe 29 und verschwenkt diese wieder zurück in die erste Stellung. Ferner schlägt der Schaltnocken 61 auf den Betätigungsarm 33 und verschwenkt die Schaltwippe 27 in die erste Stellung, in der der Schalter 31 in Aus-Stellung ist und die Leitung 55 unterbricht. Dadurch kann die Steuereinheit den Gasgenerator im Rückhaltefall nicht aktivieren, was jedoch auch nicht notwendig ist, da der dem Gurtaufroller zugeordnete Fahrzeugsitz nicht belegt ist.

Die in Figur 7 gezeigte Ausführungsform entspricht im wesentlichen der zuvor gezeigten, wobei jedoch anstatt zwei drei Planetenräder 19, 21, 22 vorgesehen sind. Jedes Planetenrad 19, 21, 22 ist mit einem Schaltnocken 25', 59', 61' versehen, die bei einer vorgegebenen abgezogenen Gurtbandlänge eine der beiden Schaltwippen 27, 29 betätigt. Der Schaltnocken 59' auf dem Planetenrad 21 dient dabei dem Überführen der Schaltwippe 27 von der ersten in die zweite Stellung. Der Schaltnocken 61' auf dem Planetenrad 22 schwenkt die Schaltwippe 27 zurück in die erste Stellung. Ferner betätigt er die Schaltwippe 29, um diese von der ersten in die zweite Stellung zu bewegen. Aus dieser zweiten Stellung wird die Schaltwippe 29 durch Auftreffen des Schaltnockens 25' auf dem Planetenrad 19 zurück in die erste Stellung überführt.

## Patentansprüche

1. Gurtaufroller für einen Fahrzeugsicherheitsgurt, mit einer in einem Gehäuse drehbar gelagerten Gurtspule, einem auf der Gurtspule aufgewickelten Gurtband, einem Sperrmechanismus (11) zur Blockierung der Gurtspulendrehung, einem Planetenzahnradgetriebe mit einem drehfest an die Gurtspule angeschlossenen Sonnenrad (17), einem gehäusefesten Hohlrad (23) und wenigstens einem Planetenrad (19, 21, 22), das eine Außenverzahnung aufweist, sowie einer elektrischen Schalteinheit zur Bestimmung des Anlegezustands aufgrund der Länge des abgezogenen Gurtbandes, wobei die Schalteinheit elektrisch mit einer Steuereinheit zur Aktivierung eines Gasgenerators gekoppelt ist und einen durch die Bewegung des Planetenrades (19, 21, 22) betätigbaren Schalthebel umfaßt, **dadurch gekennzeichnet, daß** der Schalthebel als zwischen einer ersten und einer zweiten Stellung verschwenkbare Schaltwippe (27) ausgebildet ist und daß das Planetenrad (19, 21, 22) wenigstens einen Schaltnocken (59, 59', 61, 61') aufweist, der bei einer vorgegebenen Länge von abgezogenem Gurtband direkt an der Schaltwippe (27) angreift und die Schaltwippe (27) von der ersten in die zweite Stellung bewegt und daß die Schalteinheit einen an die Schaltwippe (27) angrenzend angeordneten elektrischen Schalter (31) aufweist, der mit der Steuereinheit elektrisch gekoppelt ist, und daß der Schalter (31) einen an der Schaltwippe (27) angreifenden Schaltstößel (41) umfaßt, der bei Verschwenken der Schaltwippe (27) betätigt wird.

2. Gurtaufroller nach Anspruch 1, **dadurch gekennzeichnet, daß** die Schaltwippe (27) zwei Betätigungsarme (33) aufweist, beim Abzug des Gurtbandes durch Anstoßen eines Schaltnockens (59, 59', 61, 61') an einem Betätigungsarm (33) von der ersten in die zweite Stellung verschwenkt wird und beim Aufrollen des Gurtbandes durch Anstoßen eines anderen Schaltnockens (59, 59', 61, 61') am anderen Betätigungsarm zurück in die erste Stellung verschwenkt wird.

3. Gurtaufroller nach Anspruch 1 oder 2, **dadurch gekennzeichnet, daß** mehrere Schaltnocken (59, 59', 61, 61') auf verschiedenen Planetenrädern (19, 21, 22) vorgesehen sind.

4. Gurtaufroller nach einem der vorhergehenden Ansprüche, **dadurch gekennzeichnet, daß** die Schaltwippe (27) einen sich radial nach außen erstreckenden Schaltarm (37) mit einer nach außen weisenden Steuerfläche (39) aufweist und daß der Schaltstößel (41) an der Steuerfläche (39) anliegt und durch Verschwenken der Schaltwippe (27) betätigt wird.

5. Gurtaufroller nach einem der vorhergehenden Ansprüche, **dadurch gekennzeichnet, daß** der Schalter (31) als vormontierte Einheit ausgebildet ist und ein Schaltergehäuse (43) aufweist, welches durch eine Schnappverbindung (45) am Gurtaufroller befestigt ist.

6. Gurtaufroller nach einem der vorstehenden Ansprüche, **gekennzeichnet durch** ein stationäres Federelement (57), das an der Schaltwippe (27) angreift und bestrebt ist, diese in der jeweils von ihr eingenommenen Stellung zu halten.

7. Gurtaufroller nach Anspruch 6, **dadurch gekennzeichnet, daß** das Federelement (57) ein am Hohlrad (23) angeformter Fortsatz ist und daß die Schaltwippe (27) einen Rastarm (35) aufweist, der in beiden Stellungen vom Federelement (57) erfaßt wird.

8. Gurtaufroller nach einem der vorstehenden Ansprüche, **dadurch gekennzeichnet, daß** der Schaltnocken (59, 59', 61, 61') ein an einem Zahn des Planetenrades (19, 21) angeformter axialer Fortsatz ist.

9. Gurtaufroller nach einem der vorstehenden Ansprüche, **gekennzeichnet durch** einen Auslösemechanismus mit einer relativ zur Gurtspule begrenzt verdrehbaren Steuerscheibe, **durch** deren Relativdrehung zur Gurtspule der Sperrmechanismus (11) aktivierbar ist, sowie **durch** eine Deaktiviereinrichtung mit einer zweiten Schaltwippe (29), die in einer ersten Schaltstellung die Steuerscheibe und **dadurch** den Sperrmechanismus blockiert.

10. Gurtaufroller nach Anspruch 9, **dadurch gekennzeichnet, daß** die Gestalt der zweiten Schaltwippe (29) im wesentlichen der der ersten Schaltwippe (27) entspricht und durch wenigstens einen Schaltnocken (25, 25', 59, 59', 61, 61') an einem Planetenrad (19, 21, 22) von der ersten in die zweite Schaltstellung und zurück bewegt werden kann.

11. Gurtaufroller nach Anspruch 10, **dadurch gekennzeichnet, daß** derselbe Schaltnocken (59, 61') sowohl die erste als auch die zweite Schaltwippe (27, 29) betätigen kann.

12. Gurtaufroller nach einem der Ansprüche 9 bis 11, **dadurch gekennzeichnet, daß** die zweite Schaltwippe (29) diametral bezüglich des Sonnenrads (17) der ersten Schaltwippe (27) gegenüberliegend angeordnet ist.

## Claims

1. A belt retractor for a vehicle seat belt, comprising a belt reel rotatably mounted in a housing, a belt webbing wound up on the belt reel, a locking mechanism (11) for blocking belt reel rotation, a planetary gearing including a sun wheel (17) connected to the belt reel for joint rotation therewith, a ring gear (23) secured to the housing and at least one planet wheel (19, 21, 22) having an outer toothing, as well as an electric switch unit for determining the buckled condition on the basis of the length of the unwound belt webbing, the switch unit being electrically coupled to a control unit for activating an inflator and including a switch lever actuatable by the movement of the planet wheel (19, 21, 22), **characterized in that** the switch lever is configured as a switch rocker (27) adapted to be swivelled between a first and a second position, and that the planet wheel (19, 21, 22) includes at least one switch cam (59, 59', 61, 61') directly engaging the switch rocker (27) and moving the switch rocker (27) from the first position into the second position when a predetermined length of unwound belt webbing is reached, and that the switch unit includes an electric switch (31) arranged adjoining the switch rocker (27) and electrically coupled to the control unit, and that the switch (31) comprises a switching plunger (41) that engages the switch rocker (27) and is actuated upon swivelling of the switch rocker (27).

2. The belt retractor as set forth in claim 1, **characterized in that** the switch rocker (27) comprises two actuating arms (33), is swivelled from the first position into the second position by abutment of a switch cam (59, 59', 61, 61') against an actuating arm (33) on unwinding of the belt webbing and is swivelled back into the first position by abutment of another switch cam (59, 59', 61, 61') against the other actuating arm on retraction of the belt webbing.

3. The belt retractor as set forth in claim 1 or 2, **characterized in that** several switch cams (59, 59', 61, 61') are provided on different planet wheels (19, 21, 22).

4. The belt retractor as set forth in any of the preceding claims, **characterized in that** the switch rocker (27) comprises a switching arm (37) extending radially outwards and having a control surface (39) facing outwards, and **in that** the switching plunger (41) is in contact with the control surface (39) and is actuated by swivelling of the switch rocker (27).

5. The belt retractor as set forth in any of the preceding claims, **characterized in that** the switch (31) is configured as a preassembled unit and comprises a switch housing (43) secured to the belt retractor by a snap connection (45).

6. The belt retractor as set forth in any of the preceding claims, **characterized by** a stationary spring element (57) that engages the switch rocker (27) and tends to maintain it in its respective present position.

7. The belt retractor as set forth in claim 6, **characterized in that** the spring element (57) is an extension molded integrally with the ring gear (23), and **in that** the switch rocker (27) comprises a latching arm (35) which is engaged by the spring element (57) in both positions.

8. The belt retractor as set forth in any of the preceding claims, **characterized in that** the switch cam (59, 59', 61, 61') is an axial extension molded integrally with a tooth of the planet wheel (19, 21).

9. The belt retractor as set forth in any of the preceding claims, **characterized by** an activating mechanism having a control disk arranged for limited rotation relative to the belt reel, rotation of the control disk relative to the belt reel being adapted to activate the locking mechanism (11), and further **characterized by** a deactivating means having a second switch rocker (29) which blocks the control disk and, thus, the locking mechanism in a first switch position.

10. The belt retractor as set forth in claim 9, **characterized in that** the second switch rocker (29) substantially corresponds in shape to that of the first switch rocker (27) and can be moved by at least one switch cam (25, 25', 59, 59', 61, 61') on a planet wheel (19, 21, 22) from the first switch position into the second switch position and back again.

11. The belt retractor as set forth in claim 10, **characterized in that** the same switch cam (59, 61') is able to actuate both the first and the second switch rocker (27, 29).

12. The belt retractor as set forth in any of claims 9 to 11, **characterized in that** with respect to the sun wheel (17), the second switch rocker (29) is arranged diametrically opposed to the first switch rocker (27).

## Revendications

1. Enrouleur de ceinture pour une ceinture de sécurité de véhicule, comportant une bobine de ceinture montée rotative dans un boîtier, une sangle de ceinture enroulée sur la bobine de ceinture, un mécanisme de blocage (11) pour bloquer la rotation de la bobine de ceinture, un engrenage à roue dentée planétaire avec une roue solaire (17) raccordée de manière solidaire en rotation à la bobine de ceinture, une couronne de train planétaire (23) solidaire du boîtier et au moins une roue planétaire (19, 21, 22) qui présente une denture extérieure, ainsi qu'une unité de commutation électrique pour déterminer l'état d'application en raison de la longueur de la sangle de ceinture retirée, l'unité de commutation étant couplée électriquement avec une unité de commande pour activer un générateur de gaz et comprenant un levier de commutation actionnable par le mouvement de la roue planétaire (19, 21, 22), **caractérisé en ce que** le levier de commutation est réalisé en tant que bascule de commutation (27) pivotable entre une première position et une deuxième position, et **en ce que** la roue planétaire (19, 21, 22) présente au moins une came de commutation (59, 59', 61, 61') qui, en cas de longueur prédéterminée de sangle retirée, engage directement la bascule de commutation (28) et fait passer la bascule de commutation depuis la première position jusque dans la deuxième position, et **en ce que** l'unité de commutation présente un interrupteur électrique agencé de manière adjacente à la bascule de commutation (27), lequel est électriquement couplé à l'unité de commande, et **en ce que** l'interrupteur (31) comprend un poussoir de commutation (41) engageant la bascule de commutation (27), lequel est actionné lorsque la bascule de commutation (27) pivote.

2. Enrouleur de ceinture selon la revendication 1, **caractérisé en ce que** la bascule de commutation (27) présente deux bras d'actionnement (33), **en ce que** lorsqu'on retire la sangle de ceinture en poussant une came de commutation (59, 59', 61, 61') contre un bras d'actionnement (33), elle est pivotée depuis la première position jusque dans la deuxième position et lorsqu'on enroule la sangle de ceinture en poussant une autre came de commutation (59, 59', 61, 61') contre l'autre bras d'actionnement, elle revient en pivotant jusque dans la première position.

3. Enrouleur de ceinture selon la revendication 1 ou 2, **caractérisé en ce qu'**il est prévu plusieurs cames de commutation (59, 59', 61, 71') sur différentes roues planétaires (19, 21, 22).

4. Enrouleur de ceinture selon l'une des revendications précédentes, **caractérisé en ce que** la bascule de commutation (27) présente un bras de commutation (37) s'étendant radialement vers l'extérieur avec une surface de commande (39) tournée vers l'extérieur et **en ce que** le poussoir de commutation (41) repose sur la surface de commande (39) et est actionné par pivotement de la bascule de commutation (27).

5. Enrouleur de ceinture selon l'une des revendications précédentes, **caractérisé en ce que** l'interrupteur (31) est réalisé sous forme d'unité préassemblée et présente un boîtier d'interrupteur (43) qui est fixé sur l'enrouleur de ceinture par une liaison par encliquetage (45).

6. Enrouleur de ceinture selon l'une des revendications précédentes, **caractérisé par** un élément ressort (57) stationnaire qui engage la bascule de commutation (27) et qui tend à retenir celle-ci dans la position respective qu'elle a adoptée.

7. Enrouleur de ceinture selon la revendication 6, **caractérisé en ce que** l'élément ressort (57) est un prolongement moulé sur la couronne de train planétaire (23) et **en ce que** la bascule de commutation (27) présente un bras d'enclenchement (35) qui est sais par l'élément ressort (57) dans les deux positions.

8. Enrouleur de ceinture selon l'une des revendications précédentes, **caractérisé en ce que** la came de commutation (59, 59', 61, 61') est un prolongement axial moulé sur une dent de la roue planétaire (19, 21).

9. Enrouleur de ceinture selon l'une des revendications précédentes, **caractérisé par** un mécanisme de déclenchement comportant un disque de commande qui peut tourner de manière limitée par rapport à la bobine de ceinture, par la rotation relative duquel par rapport à la bobine de ceinture le mécanisme de blocage (11) peut être activé, ainsi que par un dispositif de désactivation comportant une deuxième bascule de commutation (29) qui, dans une première position de commutation, bloque le disque de commande et par conséquent le mécanisme de blocage.

10. Enrouleur de ceinture selon la revendication 9, **caractérisé en ce que** la configuration de la deuxième bascule de commutation (29) correspond sensiblement à celle de la première bascule de commutation (27) et peut être déplacée par au moins une came de commutation (25, 25', 59, 59', 61, 61') sur une roue planétaire (19, 21, 22) depuis la première position de commutation jusque dans la deuxième position de commutation et en retour.

11. Enrouleur de ceinture selon la revendication 10, **caractérisé en ce que** la même came de commutation (59, 61') peut actionner tant la première que la deuxième bascule de commutation (27, 29).

12. Enrouleur de ceinture selon l'une des revendications 9 à 11, **caractérisé en ce que** la deuxième bascule de commutation (29) est agencée diamétralement opposée à la première bascule de commutation (27), par rapport à la roue solaire (17).
